# EUROPEAN PATENT SPECIFICATION

(11) **EP 3 418 347 B1**
(45) Date of publication and mention of the grant of the patent: **15.05.2019**
(21) Application number: 17177103.3
(22) Date of filing: 21.06.2017
(51) Int. Cl.: C09K 9/02, G02C 7/10, G02B 5/23

(54) **PHOTOCHROMIC COMPOSITION, SPECTACLE LENS, PROCESS FOR MANUFACTURING A SPECTACLE LENS, AND SPECTACLE**
PHOTOCHROME ZUSAMMENSETZUNG, BRILLENGLAS, VERFAHREN ZUR HERSTELLUNG EINES BRILLENGLASES UND BRILLE
COMPOSITION PHOTOCHROMIQUE, VERRE DE LUNETTES, PROCÉDÉ DE FABRICATION D'UN VERRE DE LUNETTES ET LUNETTES

(43) Date of publication of application: 26.12.2018
(73) Proprietor: Carl Zeiss Vision International GmbH, 73430 Aalen (DE)
(72) Inventor: CHEN, Fang, Hallet Cove South Australia 5158 (AU)
(74) Representative: Louis Pöhlau Lohrentz

(56) References cited:
- US-A1- 2010 230 650
- US-B2- 8 576 471

## Description

The present invention relates to a photochromic composition, a spectacle lens comprising it and a spectacle comprising said spectacle lens as well as to a process for manufacturing said spectacle lens.

Photochromic optical elements, such as lenses, that darken and fade automatically in response to changing light are widely known. The color changing function of these elements is based on a change from a ground state to an activated state of a photochromic dye. This change is based on a reversible color change wherein the photochromic compound switches between a faded or minimally colored ground state when not exposed to sunlight and to a darkened state when exposed thereto. This reversible color change is also designated as photochroism.

Thus, photochromic compositions are especially used in spectacles for outdoor use or combined indoor and outdoor use. In addition to photochromic properties, a number of further properties are demanded from a spectacle lens prepared from such compositions enabling the production of high quality, high performance photochromic optical material. In existing processes for producing photochromic compositions and optical elements comprising them, the focus has been set on one or the other property and a number of processes have been suggested for obtaining them. One approach in the state of the art is to include a photochromic compound in a composition comprising radically polymerizable monomers and then casting and curing the composition to produce the optical element.

Photochromic compositions and lenses are widely known in the state of art.

US 7,169,941 B2 is directed to a photochromic composition containing a chromene compound in high concentration in a polymer matrix which can provide photochromism to an optical article. The photochromic composition can also be applied as a coating agent on a polymeric matrix.

US 8,576,471 B2 discloses a casting composition for the manufacture of a photochromic optical element comprising an acrylate or methacrylate monomer, a photochromic compound, a terpinolene-based radical chain transfer agent and a thermal free radical initiator.

US 8,012,596 B2 discloses another photochromic lens substrate containing a photochromic compound.

WO 97/05213 A1 discloses a photochromic monomer, which comprises in a single molecule a photochromic dye moiety and a polymerizable group. The approach of WO 97/05213 A1 is to incorporate photochromic material uniformly in an optical article to avoid an uneven coloration. Disadvantageously, it is cumbersome to produce a photochromic monomer wherein an appropriate photochromic dye moiety is to be linked via an appropriate spacer group with an appropriate polymerizable group.

US 6,342,571 B1 is directed to a high refractive index optical resin composition into which photochromic dyes can be incorporated.

US 2010/0230650 A1 discloses a photochromic curable composition.

Generally, it has been found that the photochromic effect of photochromic dyes, i.e. the transition between the faded ground state and the darkened activated state, is better when the photochromic lens material is soft, whereas in a rigid environment the photochromic switching speed is reduced. In order for the lens to be suitable in optical applications, an anti-reflective (AR) coating is typically applied to the surface of the lens to optimize visual acuity. An anti-reflective coating with a high durability will be obtained only if the substrate on which it is formed is a rigid supporting material.

Consequently, there is a need for photochromic optical elements having both an excellent photochromic switching speed and rigid mechanical properties.

It is an object of the invention to overcome the drawbacks existing in the art.

To solve this object, the present invention provides a photochromic composition comprising at least one photochromic compound, and at least one radically polymerizable monomer, wherein said at least one radically polymerizable monomer is a polymerizable multifunctional monomer comprising at least three reactive groups and is present in an amount of 20 to 50 wt.-%, based on the total weight of the photochromic composition, said photochromic composition further comprises at least one, preferably one, bifunctional acrylate, or at least one, preferably one, bifunctional methacrylate or a mixture thereof, wherein said bifunctional acrylate or bifunctional methacrylate, respectively, has the chemical formula (I): 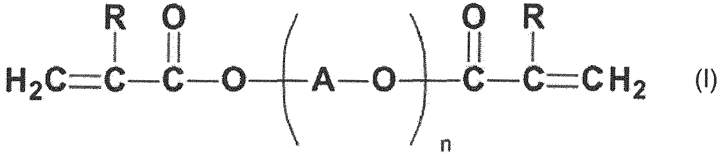 wherein:
R is H or CH₃, A is alkylene with 3 to 6 carbon atoms, more preferably 4 to 5 carbon atoms, even more preferably 4 carbon atoms, and
n is an integer of 8 to 12, more preferably of 9 to 10.

A photochromic compound is a photochromic dye. These terms can be interchangeably used.

Preferred embodiments of the invention are specified in claims 2 to 11.

The object underlying the present invention is also solved by providing a spectacle lens made of a photochromic composition according to the invention.

The object of the invention is also solved by providing a spectacle comprising the spectacle lens of the present invention.

The object of the invention is further solved by a process for manufacturing a spectacle lens wherein said process comprises the following steps: Introducing a photochromic composition according to the invention into a mold and curing said photochromic composition. A preferred embodiment of the process is specified in claim 15.

It was found that the specific photochromic composition of the present invention comprising at least one photochromic compound, at least one radically polymerizable monomer, wherein said at least one radically polymerizable monomer is a polymerizable multifunctional monomer comprising at least three reactive groups, and at least one bifunctional acrylate as defined in chemical formula (I), or at least one bifunctional methacrylate as defined in chemical formula (I), or a mixture thereof allows for manufacturing a spectacle lens having both excellent mechanical properties and a fast photochromic switching speed.

The term "reactive group(s)" means chemical moieties, attached to monomeric compounds, which react in a polymerization reaction started by a free radical initiator.

The inventor found out that surprisingly the photochromic switching speed and the mechanical properties of a spectacle lens can be both optimized when the photochromic composition used to manufacture the spectacle lens has a very narrowly defined composition as claimed in any one of claims 1 to 11.

Although the spectacle lens is made by curing the photochromic composition of the invention wherein said photochromic composition comprises polymerizable monomers having each at least three reactive groups, the spectacle lens nevertheless surprisingly shows a superior photochromic switching speed. The inventor has found out that the bifunctional acrylate or bifunctional methacrylate, illustrated by formula (I) and comprised by the photochromic composition of the invention, surprisingly allows obtaining a spectacle lens having an excellent mechanical rigidity and a superior photochromic switching speed.

According to a preferred embodiment of the invention the alkylene moiety A of chemical compound of formula (I) is linear and is selected from the group consisting of n-propylene, n-butylene, n-pentylene, or n-hexylene. Preferably, the alkylene moiety A is n-propylene, n-butylene or n-pentylene. Most preferably, the alkylene moiety is n-butylene.

Illustrative examples of compounds represented by chemical formula (I) include bifunctional polyalkylene glycol(meth)acrylates such as polypropylene glycol diacrylate, polypropylene glycol dimethacrylate, polytetramethylene glycol diacrylate, polytetramethylene glycol dimethacrylate, polypentylene glycol diacrylate, polypentylene glycol dimethacrylate, polyhexylene glycol diacrylate and polyhexylene glycol dimethacrylate. Of these, polytetramethylene glycol diacrylate and polytetramethylene glycol dimethacrylate are particularly preferred.

Moreover, it is preferred that the integer n is 9. Furthermore, it is preferred that the integer n is 11. Most preferably, the integer n is 10.

Furthermore, it is preferred that the integer n is 9 or 10.

Moreover, it is preferred that R is CH₃.

According to a very preferred embodiment of the invention the photochromic composition of the invention comprises a bifunctional methacrylate having the chemical formula (II) or (III): 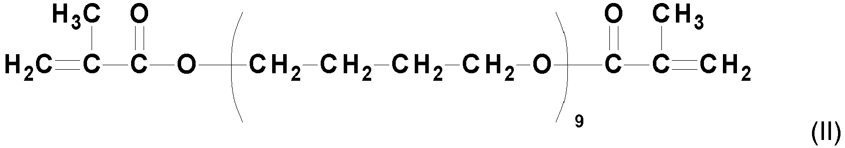 or

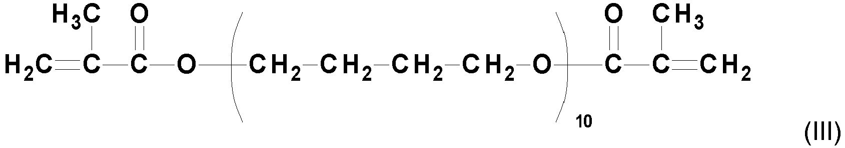

It turned out surprisingly that the use of a bifunctional compound as narrowly specified in chemical formula (I), and in particular as specified in chemical formula (II) or (III), in a photochromic composition of the invention for manufacturing a spectacle lens allows providing a spectacle lens and a spectacle having a high photochromic switching speed and the desired superior rigidity.

Moreover, surprisingly, the bifunctional methacrylate having the chemical formula (II) or (III) allows producing particular clear spectacle lenses. That is to say, when using a photochromic composition comprising the bifunctional methacrylate having the chemical formula (II) or (III), the produced spectacle lens does not have any haze in the lens. When using the corresponding bifunctional acrylate compound, i.e. a compound according to chemical formula (II) or (III) wherein only the methacrylate moieties are replaced with acrylate moieties, the produced spectacle lenses have a light haze. The reason for that effect is not understood. Remarkably, the photochromic speed is the same irrespective of the use of bifunctional methacrylate having the chemical formula (II) or (III) or the respective corresponding bifunctional acrylate. For that reason, the use of the bifunctional methacrylate compound having the chemical formula (II) or (III) is particularly preferred according to the invention.

According to a preferred embodiment of the invention only one bifunctional acrylate or only one bifunctional methacrylate having the chemical formula (I) or only one bifunctional methacrylate having the chemical formula (II) or only one bifunctional methacrylate having the chemical formula (III) is used with a defined integer n of 9, 10, or 11, preferably with an integer n of 9 or 10. That is to say, according to an embodiment of the invention, the one bifunctional acrylate or the one bifunctional methacrylate having the chemical formula (I) or the one bifunctional methacrylate having the chemical formula (II) or the one bifunctional methacrylate having the chemical formula (III) having each a defined integer is not used in admixture with other bifunctional acrylates or bifunctional methacrylates of chemical formula (I) or (II) or (III) having an integer n which is different from the one bifunctional acrylate or the one bifunctional methacrylate with the defined integer n.

According to a preferred embodiment of the invention, the photochromic composition comprises said at least one bifunctional acrylate or said at least one bifunctional methacrylate having the chemical formula according to formula (I) in an amount of 15 to 50 wt.-%, preferably of 20 to 40 wt.-%, more preferably of 25 to 35 wt.-%, based on the total weight of the photochromic composition.

According to a preferred embodiment of the invention, the reactive group of the radically polymerizable multifunctional monomer is selected from the group consisting of acrylate, methacrylate, and mixtures thereof.

According to a preferred embodiment of the invention, the polymerizable multifunctional monomer comprises at least three or at least four reactive groups. According to another embodiment of the invention the polymerizable multifunctional monomer comprises three to six reactive groups, preferably three to four reactive groups.

Preferably, said radically polymerizable multifunctional monomer is present in an amount of 20 to 40 wt.-%, further preferably 25 to 35 wt.-%, based on the total weight of the photochromic composition.

According to another embodiment of the invention, the photochromic composition further comprises at least one radically polymerizable bifunctional monomer having two reactive groups, which is different from the bifunctional acrylate or methacrylate having the chemical formula (I), (II) or (III). This at least one radically polymerizable bifunctional monomer is preferably present in the photochromic composition in an amount of 5 to 40 wt.-%, preferably of 10 to 30 wt.-%, more preferably of 15 to 25 wt.-%, based on the total weight of the photochromic composition. Preferably, said radically polymerizable bifunctional monomer, different from the bifunctional acrylate or methacrylate having the chemical formula (I), (II) or (III), is a radically polymerizable diacrylate, dimethacrylate, or a mixture thereof.

This bifunctional acrylate or bifunctional methacrylate monomer, which is different from the bifunctional (meth)acrylate having the formula II, preferably used in the present invention, may include one or more monomers selected from the group consisting of: alkylene diacrylates, such as decanediol diacrylate; poly(alkyleneoxide) diacrylates such as polyethylene glycol 200 diacrylate, NK Ester A400 (polyethylene glycol 400 diacrylate), NK Ester A600 (polyethylene glycol 600 diacrylate), NK Ester APG-200 (tripropylene glycol diacrylate) and NK Ester APG-400 (polypropylene glycol 400 diacrylate); poly(alkyleneoxide) dimethacrylates such as NK Ester 14G, NK Ester 9G, NK Ester 4G, and NK Ester 2G; and urethane acrylates or methacrylates such as NK Oligo U-4HA, NK Oligo U-6HA, NK Oligo U-2PPA. In some embodiments, the bifunctional acrylate or methacrylate monomer is selected from the group consisting of: NK Ester 14G, NK Ester 9G, NK Ester 2G, and ethoxylated bisphenol-A dimethacrylate (having between 1 and 10 ethoxy groups per molecule). These compounds are available from Shin-Nakamura Chemical Co., Ltd., Japan.

Preferably, NK Ester 2G (formula IV) and/or NK Oligo U-2PPA (formula V) is/are used.

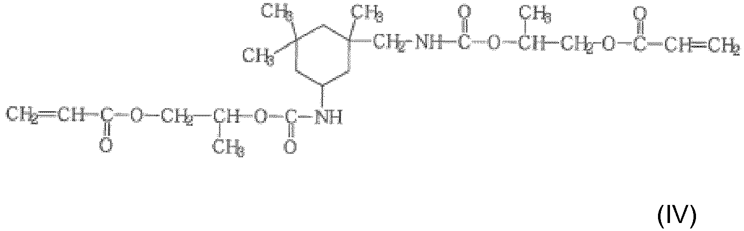

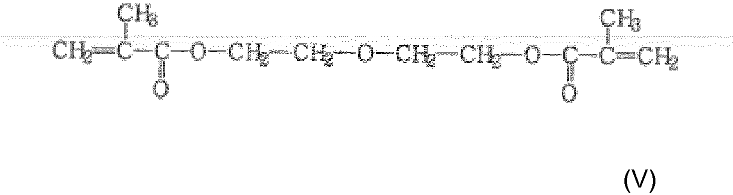

According to another embodiment of the invention, a 50/50 (w/w) mixture of NK Ester 2G and NK Oligo U-2PPA is used.

According to another embodiment of the invention, the photochromic composition comprises less than 5 wt.-%, more preferably less than 2 wt.-%, more preferably less than 1 wt.-%, more preferably less than 0.5 wt.-%, of radically polymerizable monofunctional monomer comprising only one reactive group, each based on the total weight of the photochromic composition. According to another preferred embodiment of the invention the photochromic composition of the invention does not contain a radically polymerizable monofunctional monomer comprising only one reactive group. It turned out that monofunctional monomers reduce significantly the mechanical rigidity of the produced spectacle lens.

According to a preferred embodiment of the invention, the photochromic composition comprises at least one amine, preferably at least one hindered amine light stabilizer (HALS). The hindered amine light stabilizer is preferably contained in the photochromic composition in an amount to neutralize acid group(s) contained in the radically polymerizable compound(s).

Surprisingly, acid group(s) contained in the radically polymerizable compound(s) can affect the photochromic dye(s). In view of that it turned out to be of a significant advantage to neutralize acid group(s) of radically polymerizable compound(s). Preferably, an amine is used to neutralize acid group(s). Surprisingly, the hindered amine light stabilizer (HALS) can be used to effectively neutralize acid group(s). If the acid group(s) is not substantially neutralized, preferably neutralized, the photochromic color can be shifted. In the end the color of the spectacle lens may not be correct. For example, a supposed-to-be grey spectacle lens can be brownish.

The photochromic composition of the invention may be stored as such and as claimed in claim 1. Before using the photochromic composition as a casting composition for the manufacture of a spectacle lens, a free radical initiator may be added. Preferably, a radical chain transfer agent is added likewise, to minimize the formation of distortion, such as striations, in the spectacle lens produced.

According to another embodiment, the radical chain transfer agent may also be included into the photochromic composition as claimed in claim 1.

According to a preferred embodiment of the invention, the photochromic composition further comprises a free radical initiator, preferably in an amount of 0.1 to 5 wt.-%, preferably 0.2 to 2 wt.-%, further preferably 0.3 to 1.5 wt.-%, based on the total weight of the photochromic composition.

According to a preferred embodiment of the invention, the radical initiator is a thermal free radical initiator. Thermal free radical initiators are heat activated catalysts that initiate a polymerization reaction. A number of thermal free radical initiators are known in the art and can be used in the present invention.

Examples of the free radical initiator that can be used in the present invention include: azo free radical initiators such as AIBN (azodiisobutyronitrile), 2,2'-azobis(4-methoxy-2.4-dimethyl valeronitrile), 2,2'-azobis(2,4-dimethyl valeronitrile), dimethyl 2,2'-azobis(2-methylpropionate), 2,2'-azobis(2-methylbutyronitrile), 1,1'-azobis(cyclohexane-1-carbonitrile), 2,2'-azobis[N-(2-propenyl)-2-methylpropionamide]; dialkyl peroxide free radical initiators such as 1,1-di-(butylperoxy-3,3,5-trimethyl cyclohexane); alkyl perester free radical initiators such as TBPEH (t-butyl per-2-ethylhexanoate); diacyl peroxide free radical initiators such as benzoyl peroxide; peroxy dicarbonate radical initiators such as ethyl hexyl percarbonate; ketone peroxide initiators such as methyl ethyl ketone peroxide, bis(t-butyl peroxide) diisopropylbenzene, t-butyl perbenzoate, t-butyl peroxy neodecanoate, and combinations thereof.

Further examples of organic peroxide free radical initiators that can be used in the present invention include: Dilauroyl peroxide, 2,2-di(4,4-di(tert-butylperoxy)cyclohexyl)propane, di(tert-butylperoxyisopropyl)benzene, di(4-tert-butylcyclohexyl) peroxydicarbonate, dicetyl peroxydicarbonate, dimyristyl peroxydicarbonate, 2,3-dimethyl-2,3-diphenylbutane, dicumyl peroxide, dibenzoyl peroxide, diisopropyl peroxydicarbonate, tert-butyl monoperoxymaleate, 2,5-dimethyl-2,5-di(tert-butylperoxy)hexane, tert-butylperoxy 2-ethylhexyl carbonate, tert-amyl peroxy-2-ethylhexanoate, tert-amyl peroxypivalate, tert-amylperoxy 2-ethylhexyl carbonate, 2,5-dimethyl-2,5-di(2-ethylhexanoylperoxy)hexane, 2,5-dimethyl-2,5-di(tert-butylperoxy)hexyne-3, di(3-methoxybutyl) peroxydicarbonate, diisobutyryl peroxide, tert-butyl peroxy-2-ethylhexanoate (Trigonox 21 S), 1,1-di(tert-butylperoxy)cyclohexane, tert-butyl peroxyneodecanoate, tert-butyl peroxypivalate, tert-butyl peroxyneoheptanoate, tert-butyl peroxydiethylacetate, 1,1-di(tert-butylperoxy)-3,3,5-trimethylcyclohexane, 3,6,9-triethyl-3,6,9-trimethyl-1,4,7-triperoxonane, di(3,5,5-trimethylhexanoyl)peroxide, tert-butyl peroxy-3,5,5-trimethylhexanoate, 1,1,3,3-tetramethylbutyl peroxy-2-ethylhexanoate, 1,1,3,3-tetramethylbutyl peroxyneodecanoate, tert-butyl peroxy-3,5,5-trimethylhexanoate, cumyl peroxyneodecanoate, di-tert-butyl peroxide, tert-butylperoxy isopropyl carbonate, tert-butyl peroxybenzoate, di(2-ethylhexyl) peroxydicarbonate, tert-butyl peroxyacetate, isopropylcumyl hydroperoxide, and tert-butyl cumyl peroxide.

TBPEH (t-butyl per-2-ethylhexanoate) is particularly preferred.

Any conventionally known radical chain transfer agent known in the state of the art and suitable for controlling the polymerization of the polymerizable monomers may be used.

According to a preferred embodiment of the invention, the photochromic composition comprises at least one radical chain transfer agent which is preferably selected from the group consisting of terpinolene and terpinolene derivative.

A terpinolene derivative can be a terpinolene-based radical chain transfer agent. For example 1-isopropyl-4-methyl-1,4-cyclohexadiene, 1-isopropyl-4-methyl-1,3-cyclohexadiene, and mixtures thereof may be used. Preferably, said chain transfer agent is present in an amount of 0.01 wt.-% to 2 wt.-%, further preferred in an amount of 0.1 to 1 wt.-%, further preferred in an amount of 0.2 to 0.5 wt.-%, based on the total weight of the photochromic composition.

The amount of radical chain transfer agent, in particular a terpinolene-based radical chain transfer agent, such terpinolene, e.g. 1-isopropyl-4-methyl-1,4-cyclohexadiene, 1-isopropyl-4-methyl-1,3-cyclohexadiene, and mixtures thereof, allows controlling the softness or rigidity of the produced lens. The higher the concentration of radical chain transfer agent, the softer the spectacle lens becomes and the faster the photochromic switching speed is. It turned out that a concentration of 0.2 to 0.5 wt.-% of the radical chain transfer agent in the photochromic composition provides a spectacle lens having both a superior rigidity and a fast photochromic switching speed.

According to an embodiment of the invention, the hindered amine light stabilizers (HALS) are for example bis(1-octyloxy-2,2,6,6-tetramethyl-4-piperidyl) decanedioate, bis(2,2,6,6-tetramethyl-4-piperidyl) decanedioate, bis(2,2,6,6-tetramethyl-1-octoxypiperidin-4-yl) decanedioate, bis(1,2,2,6,6-pentamethylpiperidin-4-yl) decanedioate, bis(1,2,2,6,6-pentamethylpiperidin-4-yl)-2-butyl-2-[(3,5-di-tert-butyl-4-hydroxyphenyl)methyl]propanedioate, 1-O-methyl 10-0-(1,2,2,6,6-pentamethylpiperidin-4-yl) decanedioate, 4-[2-(4-hydroxy-2,2,6,6-tetramethylpiperidin-1-yl)ethoxy]-4-oxobutanoic acid, 3,3,5,5-tetramethyl-1-[2-(3,3,5,5-tetramethyl-2-oxopiperazin-1-yl)ethyl]piperazin-2-one, 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane, N-[6-[formyl-(2,2,6,6-tetramethylpiperidin-4-yl)amino]hexyl]-N-(2,2,6,6-tetramethylpiperidin-4-yl)formamide, 2,6-Bis(2,2,6,6-tetramethylpiperidin-4-yl)-1H,4H,5H,8H-2,3a,4a,6,7a,8a-hexaazaperhydrocyclopentafluorene-4,8-dione, Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]), Poly[N,N'-bis(2,2,6,6-tetramethyl-4-piperidinyl)-1,6-hexanediamine-co-2,4-dichloro-6-morpholino-1,3,5-triazine] or combinations thereof.

Commercially available from BASF SE (Ludwigshafen; Germany) are for example Tinuvin® PA 123, Tinuvin® 144, Tinuvin® 622LD, Tinuvin® 770, Tinuvin® 765, Uvinul® 4050H, Uvinul® 4077H, Uvinul® 4092H, Uvinul® 5050 H, Uvinul® 5062 H or Chimassorb® 944LD.

According to a preferred embodiment of the invention, the hindered amine light stabilizer is preferably 2,2,6,6-tetramethyl piperidine or a derivative thereof.

The hindered amine light stabilizer, preferably 2,2,6,6-tetramethyl piperidine, is preferably present in the photochromic composition in an amount of 0.01 wt.-% to 1 wt.-%, preferably 0.05 to 0.5 wt.-%, based on the total weight of the photochromic composition.

Photochromic compounds or dyes that can be suitably used in the present invention may be chosen from a range of compounds that are known and have been used in applications in which a sunlight-induced reversible color change or darkening is desired.

According to a preferred embodiment of the invention, the at least one photochromic compound is preferably selected from the group consisting of spironaphthoxazines, spiropyrans, naphthopyrans, triarylmethanes, stilbenes, azastilbenes, nitrones, fulgides, spirooxazines, quinones, chromenes, and mixtures thereof.

Preferably, the photochromic compound is present in an amount of 0.001 to 0.5 wt.-%, preferably of 0.1 to 0.1 wt.-%, based on the total weight of photochromic composition.

Preferably, the photochromic compounds have a visible lambda max of from 400 nm to 700 nm.

Photochromic compounds suitable for use in the present invention may be selected from the group consisting of:
1,3-dihydrospiro[2H-anthra[2,3-d]imidazole-2,1'-cyclohexane]-5,10-dione;
1,3-dihydrospiro[2H-anthra[2,3-d]imidazole-2,1'-cyclohexane]-6,11-dione;
1,3-dihydro-4-(phenylthio)spiro[2H-anthra-1',2-diimidazole-2,1'-cyclohexane-6,11-dione;
1,3-dihydrospiro[2-H-anthra[1,2-d]imidazole-2,1'-cycloheptane]-6,11-dione-1,3,3-trimethylspiroindole-2,3'[3H]naphtho[2,1-b]-1,4-oxazine]2-methyl-3,3'-spiro-bi-[3H-naphtho[2,1-bipyran](2-Me);
2-phenyl-3-methyl-7-methoxy-8'-nitrospiro[4H]-1-benzopyran-4,3'-[3H]-naphtho[2,1-bipyran;
spiro[2H-1-benzopyran-2,9'-xanthene];
8-methoxy-1',3'-dimethylspiro(2H-1-benzopyran-2,2'-(1'H)-quinoline; 2,2'-spiro-bi-[2H-1-benzopyran];
5'-amino-1',3',3'-trimethylspiro[2H-1-benzopyran-2,2'-indoline;
ethyl-.beta.-methyl-.beta.-(3',3'-dimethyl-6-nitrospiro(2H-1-benzopyran-2,2'-indolin-1'-yl)-propenoate;
(1,3-propanediyl)bis[3',3'-dimethyl-6-nitrospiro[2H-1-benzopyran-2,2'-indoline]; 3,3'-dimethyl-6-nitrospiro[2H-1-benzopyrao-2,2'-benzoxazoline];
6'-methylthio-3,3'-dimethyl-8-methoxy-6-nitrospiro[2H-1-benzopyran-2,2'-benzothiozoline];
(1,2-ethanediyl)bis[8-methoxy-3-methyl-6-nitrospiro[2H-1-benzopyran-2,2'-benzothiozoline];
N-N'-bis(3,3'-dimethyl-6-nitrospiro[2H-1-benzopyran-2,2'(3'H)-benzothioazol-6'-yl)decanediamide];
alpha.-(2,5-dimethyl-3-furyl)ethylidene(Z)-ethylidenesuccinicanhydride; alpha.-(2,5-dimethyl-3-furyl)-.alpha.',-delta.-dimethylfulgide;
2,5-diphenyl-4-(2'-chlorophenyl)imidazole;
(2',4'-dinitrophenyl)methyl]-1H-benzimidazole;
N-N-diethyl-2-phenyl-2H-phenanthro[9,10-d]imidazol-2-amine;
2-nitro-3-aminofluoren 2-amino-4-(2'-furanyl)-6H-1,3-thiazine-6-thione.

Commercial photochromic compounds may also be used. Examples of commercial photochromic compounds may include any one or more selected from the group consisting of: CNN11, CNN12, CNN13, CNN14, CNN15, CNN16, CNN17 (from Tokuyama), Reversacol Midnight Gray, Reversacol Pacific Blue, Reversacol Sunflower, and Reversacol Corn Yellow (from James Robinson). Other known commercial photochromic compounds may also be used.

Optionally, a mixture of two or more of the photochromic compounds may be used. By using appropriate mixtures of photochromic compounds, it is possible to obtain specific activated colors.

According to an embodiment of the invention the photochromic compound(s) or dye(s) are not covalently bonded to radically polymerizable monomer(s).

According to a preferred embodiment of the invention, the photochromic composition comprises as polymerizable multifunctional monomer at least one multifunctional acrylate, or at least one multifunctional methacrylate or a mixture thereof, wherein said at least one multifunctional acrylate, or at least one multifunctional methacrylate or a mixture thereof is present in an amount of 20 to 50 wt.-%, preferably 20 to 40 wt.-%, more preferably 25 to 35 wt.-%,based on the total weight of the photochromic composition.

For example tris(2-acryloxyethyl) isocyanurate, ε-caprolactone ethoxylated isocyanuric acid triacrylate, ethoxylated isocyanuric acid triacrylate, ethoxylated glycerine triacrylate (EO9mol), ethoxylated glycerine triacrylate (EO20mol), pentaerythritol triacrylate, pentaerythritol triacrylate, trimethylol propane triacrylate, ditrimethylol propane tetraacrylate, ethoxylated pentaerythritol tetraacrylate (EO35mol), tetramethylol methane tetraacrylate, di-pentaerythritol polyacrylate, di-pentaerythritol polyacrylate can be used. Multifunctional acrylates and methacrylates are available, for example, by Shin-Nakamura Chemical Co., Ltd., Japan.

Preferably, the multifunctional acrylate is a triacrylate compound or tetraacrylate compound. Preferably, the multifunctional methacrylate is a trimethacrylate compound or tetramethacrylate compound. Of course, mixtures of the triacrylate compound, tetraacrylate compound, trimethacrylate compound and/or tetramethacrylate compound can be used for the purpose of this invention.

According to a preferred embodiment, the multifunctional acrylate is selected from the group consisting of pentaerythritol triacrylate, pentaerythritol tetraacrylate, and mixtures thereof. According to a preferred embodiment, the multifunctional methacrylate is selected from the group consisting of pentaerythritol trimethacrylate, pentaerythritol tetramethacrylate, and mixtures thereof.

According to a preferred embodiment of the invention, the trifunctional methacrylate monomer NK Ester TMPT (formula VI) of Shin-Nakamura Chemical Co., Ltd., JP is used:

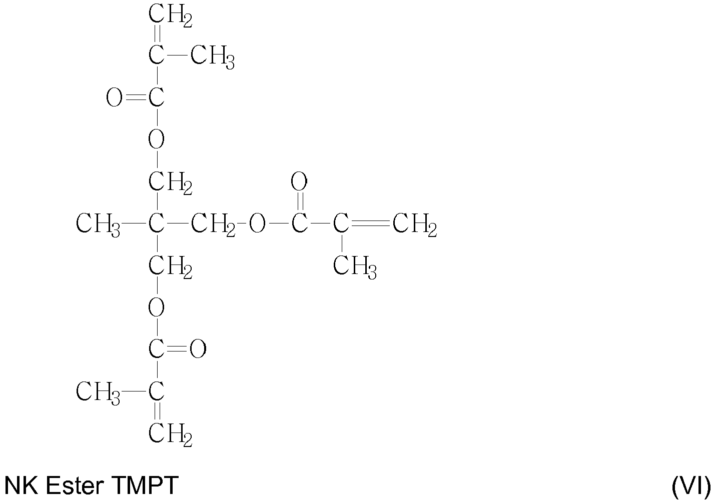

According to another preferred embodiment of the invention, the trifunctional acrylate monomer NK Ester A-TMM-3L of Shin-Nakamura Chemical Co., Ltd., JP is used. The reactivity of the acrylate monomer is higher than of the methacrylate. NK Ester A-TMM-3L is a mixture of about 55 wt.-% Pentaerythritol triacrylate (formula VII) and 45 wt.-% Pentaerythritol tetraacrylate (formula VIII). It is a liquid at room temperature.

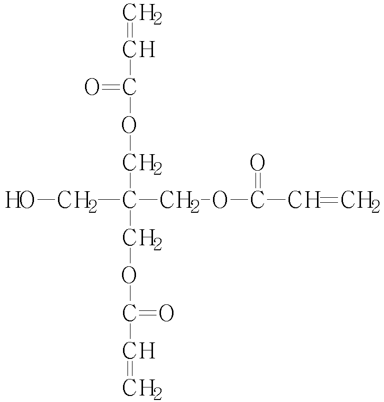

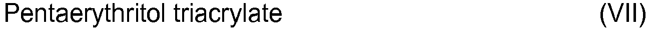

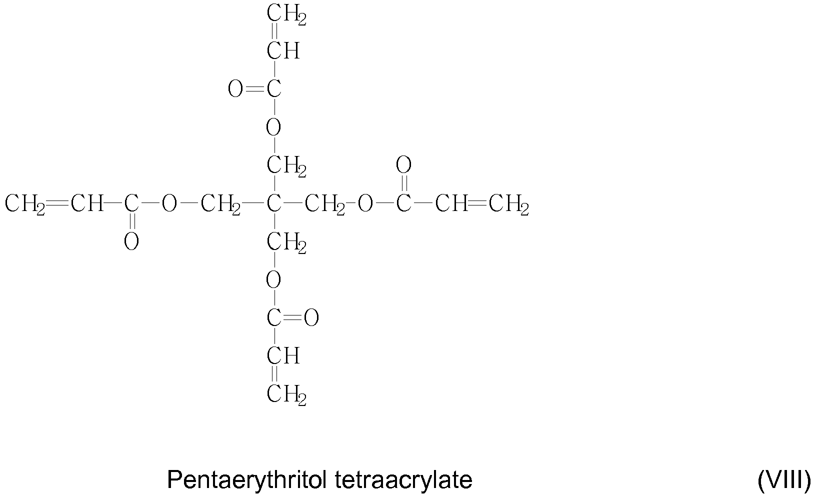

According to a preferred embodiment of the invention, the photochromic composition comprises 1,9-nonanediol dimethacrylate, preferably in an amount of 5 to 40 wt.-%, preferably 10 to 30 wt.-%, further preferably 15 to 25 wt.-%, based on the total weight of the photochromic composition. 10 wt.-% of 1,9-nonanediol dimethacrylate are particularly preferred.

1,9-nonanediol dimethacrylate has been found particularly suitable in a photochromic composition of the invention. It is available, for example, as Light Ester 1.9 ND from Kyoeisha Chemica, Japan, and allows to dissolve the photochromic compound extremely well.

The photochromic composition of the present invention may contain further additives and/or adjuvants. For example, the photochromic composition may contain additional conventional adjuvants that impart desired properties or characteristics to the optical lens, or which enhance the performance of the optical lens. Such adjuvants include, but are not limited to, light stabilisers, UV absorbers, heat stabilisers, tints, dyes, free radical scavengers, plasticisers, flow additives, antioxidants, and other processing aids.

UV absorbers may include, for example, members or derivatives of a benzophenone class, a benzotriazole class, a cyanoacrylate class or a triazine class. Commercially available UV absorbers may include, for example Chimassorb 81 or Tinuvin 81/213/234/326/328/329/360/571/1577/P (from BASF, Germany).

The photochromic composition may further include one or more antioxidants. In some embodiments, the one or more antioxidants may improve the quality and/or durability of the optical lens formed from the photochromic composition. The one or more antioxidants may include a primary antioxidant (e.g. a butylated hydroxytoluene (BHT) or a hindered phenol) and/or a secondary antioxidant (e.g. a phosphite or thioester). Commercially available antioxidants include, for example, Irganox 1010, Irganox 1076, Irganox 245, Irganox 1035, Irganox B225, Irganox B900, Irgafos 126, Irgafos P-EPQ, Irgafos 168, and Irgafos 38.

The antioxidant may be used in the photochromic composition in a concentration of 0.01 to 0.5 wt.-%, based on the total weight of the photochromic composition. Preferably, the antioxidant will be used in the composition in a concentration of approximately 0.1 wt.-%, based on the total weight of the photochromic composition.

The composition may further include a small quantity of a permanent dye (i.e. a non-photochromic dye such as Solvaperm red BB). The small quantity of permanent dye may be used to minimize or mask undesired residual color in the optical element formed from the polymerizable composition. For example, 0.01 to 0.1 wt.-% of a 0.025 wt.-% solution of a permanent dye concentrate may be used in the photochromic composition.

According to another embodiment of the invention, the photochromic composition additionally comprises at least an urethane acrylate and/or urethane methacrylate, preferably in an amount of 5 to 40 wt.-%, further preferably 10 to 30 wt.-%, based on the total weight of the photochromic composition.

According to a preferred embodiment of the invention, the photochromic composition comprises 0.001 to 0.5 wt.-% of at least one photochromic compound, and
20 to 50 wt.-%, preferably 20 to 40 wt.-%, of at least one radically polymerizable monomer, wherein said at least one radically polymerizable monomer is a polymerizable multifunctional monomer comprising three or four reactive groups, preferably three or four methacrylate groups, acrylate groups, or mixture of these groups, and
15 to 50 wt.-%, preferably 20 to 40 wt.-%, preferably 25 to 35 wt.-%, bifunctional acrylate, or bifunctional methacrylate or a mixture thereof, wherein said bifunctional acrylate or bifunctional methacrylate, respectively, having the chemical formula (II) or (III): 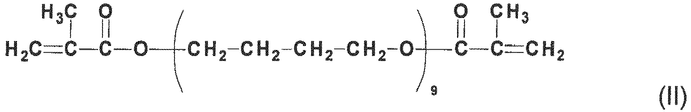 or

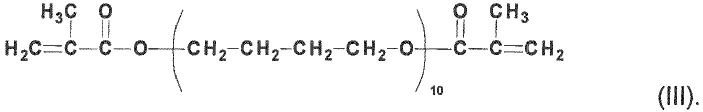

The compounds according to formulas (II) and (III) are commercially available, e.g., from Shin-Nakamura Chemical Co., Ltd. Japan. For example, the compound according to formula (II) is available under the name "NK Ester PTMG65".

The amount of wt.-% refers to the total weight of the photochromic composition unless otherwise specified.

According to the invention, the spectacle lens is made of a photochromic composition according to any one of claims 1 to 11.

The spectacle lens can be an ophthalmic lens.

The invention is also directed to optical elements and optical lenses in general, which can be manufactured from the photochromic composition as claimed in any one of claims 1 to 11 and disclosed in this specification.

According to an embodiment of the invention, the optical element, optical lens and ophthalmic lens is not a contact lens.

Preferably the optical lens is a spectacle lens.

According to the invention, the spectacle comprises a spectacle lens according to claim 12. The spectacle can be selected from the group consisting of sunglasses, protective glasses, reading glasses, glasses for far-sightedness, spectacles for outdoor, spectacles for indoor, and combinations thereof.

According to the invention the process for manufacturing a spectacle lens comprises the following steps: Introducing a photochromic composition according to any one of claims 1 to 11 into a mold, and curing said photochromic composition.

According to a preferred embodiment of the invention, a spectacle lens made of the photochromic composition according to any one of claims 1 to 11 is characterized by superior mechanical properties and an excellent photochromic switching speed.

The photochromic switching speed is characterized by the T_{3/4} fading time as well as the fading time to 70% as measured by the photochromic rig. The T_{3/4} fading time is the time used for three quarters of the absorbance to fade back. The fading time to 70 % is the time used for the transmittance to fade to 70 %. The T_{3/4} fading time and the fading time to 70 % are used to monitor the photochromic switching speed. The initial T % and fully activated T % relate to optical transmission test results of the spectacle lens or optical elements maintained in dark or light conditions.

The T_{3/4} fading time as well as fading time to 70% are performed as specified in EN1836: 1997 and ISO 8980-3, with a conditioning beam (as specified in the standard) being set to 50klux. All lenses are tested at 23°C.

The mechanical properties of the materials are measured by the Dynamic Mechanical Analyzer (DMA), DMA 8000 of Perkin Elmer, USA. The DMA measure the stiffness of the material by the storage modulus using 3-point bending method.

The typical sample size is 2 mm thick, 8.5 mm wide and 45 mm long. The accurate sample thickness and width need to be measured before the test for the modulus calculation. The temperature scanning range is from 25 °C to 140 °C. The heating rate is 2 °C /minute. Probe displacement is set at 0.05 mm.

In order to get a digital number to characterize a formulation, the storage modulus at 35°C is used to characterize the stiffness of the material. The Tan ð value at 35°C is used to characterize the long term stability of the material, like the damping or the polymer relaxation.

The rimless fitting tensile strength is used to characterize the brittleness of the material and measured using 2 mm thick piano lenses. Two holes were drilled on two sides of the lens to simulate the rimless fitting. Instron mechanical tester (Instron 3365, made in USA) was used to measure the force to break the lens from the holes. The impact strength of the lens material is measured by the drop ball test according to FDA regulation 21 CFR 801.410.

The spectacle lens of the invention has preferably a storage modulus value at 35°C of higher than 1.2 GPa, preferably of higher than 1.24 GPa, preferably of higher than 1.3 GPa, preferably of higher than 1.33 GPa, preferably of higher than 1.35 GPa.

The spectacle lens of the invention, made of the photochromic composition according to any one of claims 1 to 11, has preferably a T_{3/4} fading time of less than 200 s, preferably less than 190 s, preferably less than 185 s, preferably less than 180 s, preferably less than 175 s.

The spectacle lens of the invention has preferably a fading time to 70 % of less than 600 s, preferably less than 550 s, preferably less than 500 s, preferably less than 450 s, preferably less than 400 s.

According to another embodiment of the invention the spectacle lens has a storage modulus value at 35°C of higher than 1.2 GPa, a T_{3/4} fading time of less than 200 s and a fading time to 70 % of less than 600 s; more preferably a storage modulus value at 35°C of higher than 1.24 GPa, a T_{3/4} fading time of less than 190 s and a fading time to 70 % of less than 550 s; more preferably a storage modulus value at 35°C of higher than 1.3 GPa, a T_{3/4} fading time of less than 185 s and fading time to 70 % of less than 500 s.

A spectacle lens manufactured from the photochromic composition according to any one of claims 1 to 11 is preferably characterized by the following physical properties:
- The storage modulus value at 35°C is preferably higher than 1.2 GPa, more preferably higher than 1.24 GPa, more preferably higher than 1.3 GPa.
- The Tan ð value at 35 °C is preferably less than 0.14, more preferably less than 0.138.
- The glass transition temperature Tg is preferably higher than 65°C, more preferably higher than 70°C, preferably higher than 75°C.
- The T_{3/4} fading time is preferably less than 200 s, preferably less than 190 s, more preferably less than 185 s.
- The fading time to 70 % is preferably less than 600 s, preferably less than 550 s, more preferably less than 500 s.

According to a preferred embodiment of the invention, said curing of the photochromic composition comprises at least a first heat treatment at a first temperature range and a second heat treatment at a second temperature range, wherein said second temperature range is 40 % to 100 % higher than the first temperature range, based on said first temperature range.

According to a preferred embodiment of the invention, said curing comprises at least a first heat treatment at a first temperature range for a first period of time in a range of 6 to 12 h, preferably 8 to 10 h, and a second heat treatment at a second temperature range for a second period of time in a range of 2 to 8 h, preferably 3 to 5 h, wherein said second temperature range is 40 % to 100 % higher than the first temperature range, based on said first temperature range.

Preferably, the temperature in the first and the second temperature range are each maintained at a constant temperature.

According to another embodiment of the invention the temperature is raised constantly from said first temperature range, which is preferably a constant first temperature, to said second temperature range, which is preferably a constant second temperature, preferably over a period of time in a range from 5 to 11 h, preferably 7 to 9 h.

According to another embodiment of the invention, the first temperature range is between 40°C to 55°C, preferably between 45 and 50°C, for example at 48°C.

According to another embodiment of the invention, the second temperature range is between 70°C to 100°C, preferably between 85°C and 95°C, for example at 90°C.

The temperature profile of the curing step can be as follows:
The oven is heated to 48°C and then the still to be cured lens body in the mold is placed in the oven at 48°C. The temperature is maintained constantly at 48°C for 9 h, then gradually heats up to 90°C in 8 hours, holds at 90°C for 4 h, then cools down to 60°C in 0.5 h. The total curing time is 21.5 h.

The photochromic composition may be used for the additive manufacturing of spectacle lenses, e.g. as printing ink. "Additive manufacturing" is understood to mean manufacturing techniques implementing a process involving fusing materials in order to manufacture objects from 3D modeling data, typically a computer-assisted design (CAD file), usually representing a layer-by-layer design, as opposed to subtractive manufacturing methods, such as traditional machining.

In an embodiment of the invention, a photochromic composition usable for the additive manufacturing of spectacle lenses, e.g. as printing ink, comprises at least one photochromic compound, and at least one radically polymerizable monomer, wherein said at least one radically polymerizable monomer is a polymerizable multifunctional monomer comprising at least three reactive groups, said photochromic composition further comprises at least one bifunctional acrylate, or at least one bifunctional methacrylate or a mixture thereof, wherein said bifunctional acrylate or bifunctional methacrylate, respectively, has the chemical formula (I): 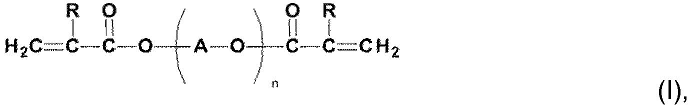 wherein R is H or CH₃, A is alkylene with 3 to 6 carbon atoms, and n is an integer of 8 to 12, preferably of 9 to 10.

Preferably the photochromic composition usable for the additive manufacturing of spectacle lenses comprises at least one of a bifunctional acrylate and bifunctional methacrylate, having the chemical formula according to formula (I), in an amount of 15 to 50 wt.-%, preferably 20 to 40 wt.-%, each based on the total weight of the photochromic composition.

Further preferably, the reactive group(s) of the polymerizable multifunctional monomer being present in the photochromic composition usable for the additive manufacturing of spectacle lenses is/are selected from the group consisting of acrylate, methacrylate, and mixtures thereof. In the photochromic composition usable for the additive manufacturing of spectacle lenses the polymerisable multifunctional monomer is present in an amount of 20 to 50 wt.-%, preferably 20 to 40 wt.-%, each based on the total weight of the photochromic composition.

Further preferably, the photochromic composition usable for the additive manufacturing of spectacle lenses further comprises at least one amine, preferably at least one hindered amine light stabilizer. Preferably the at least one amine is present in the photochromic composition usable for the additive manufacturing of spectacle lenses in an amount of 0.01 to 1 wt.-%, particularly preferably in an amount of 0.03 to 0.6 wt.-%, each based on the total weight of the photochromic composition. Preferably the at least one hindered amine light stabilizer is 2,2,6,6-tetramethyl piperidine or a derivative thereof. Further preferably 2,2,6,6-tetramethyl piperidine or a derivative thereof is present in the photochromic composition usable for the additive manufacturing of spectacle lenses in an amount of 0.01 to 0.9 wt.-%, particularly preferably in an amount of 0.02 to 0.4 wt.-%, each based on the total weight of the photochromic composition.

Further preferably, the photochromic composition usable for the additive manufacturing of spectacle lenses further comprises a free radical initiator, preferably in an amount of 0.1 to 5 wt.-%, based on the total weight of the photochromic composition.

Further preferably, the photochromic composition usable for the additive manufacturing of spectacle lenses comprises at least one radical chain transfer agent, the radical chain transfer agent being preferably selected from the group consisting of terpinolene, terpinolene derivative, 1-isopropyl-4-methyl-1,4-cyclohexadiene, 1-isopropyl-4-methyl-1,3-cyclohexadiene, and mixtures thereof. The radical chain transfer agent is preferably present in the photochromic composition usable for the additive manufacturing of spectacle lenses in an amount of 0.01 wt.-% to 2 wt.-%, particularly preferably in an amount of 0.02 wt.-% to 1.5 wt.-%, each based on the total weight of the photochromic composition.

Further preferably, the at least one photochromic compound being present in the photochromic composition usable for the additive manufacturing of spectacle lenses is selected from the group consisting of spironaphthoxazines, spiropyrans, naphthopyrans, triarylmethanes, stilbenes, azastilbenes, nitrones, fulgides, spirooxazines, quinones, chromenes, and mixtures thereof. Preferably said photochromic compound is present in the photochromic composition usable for the additive manufacturing of spectacle lenses in an amount of 0.001 to 0.5 wt.-%, particularly preferably of 0.01 to 0.1 wt.-%, each based on the total weight of photochromic composition.

Further preferably, the photochromic composition usable for the additive manufacturing of spectacle lenses additionally comprises at least one bifunctional acrylate or at least one bifunctional methacrylate having a chemical formula different from formula (I), preferably 1,9-nonanediol dimethacrylate. The at least one bifunctional acrylate or at least one bifunctional methacrylate having a chemical formula different from formula (I) is preferably present in the photochromic composition usable for the additive manufacturing for spectacle lenses in an amount of 5 to 40 wt.-%, preferably 10 to 30 wt.-%, each based on the total weight of the photochromic composition.

Further preferably, the photochromic composition usable for the additive manufacturing of spectacle lenses additionally comprises at least one urethane acrylate and/or urethane methacrylate. The at least one urethane acrylate and/or urethane methacrylate is preferably present in the photochromic composition usable for the additive manufacturing of spectacle lenses in an amount of 5 to 40 wt.-%, particularly preferably in an amount of 11 to 29 wt.-%, each based on the total weight of the photochromic composition.

In another embodiment of the invention, a spectacle lens is manufactured via an additive manufacturing process, wherein a photochromic composition is used e.g. as printing ink, the photochromic composition comprising at least one photochromic compound, and at least one radically polymerizable monomer, wherein said at least one radically polymerizable monomer is a polymerizable multifunctional monomer comprising at least three reactive groups, said photochromic composition further comprises at least one bifunctional acrylate, or at least one bifunctional methacrylate or a mixture thereof, wherein said bifunctional acrylate or bifunctional methacrylate, respectively, has the chemical formula (I): 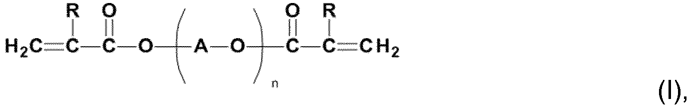 wherein R is H or CH₃, A is alkylene with 3 to 6 carbon atoms, and n is an integer of 8 to 12, preferably of 9 to 10. With respect to the printing ink, the above mentioned features apply as well.

In another embodiment of the invention, a spectacle lens is manufactured via an additive manufacturing process, wherein a composition A and a composition B is used e.g. as printing ink. In this embodiment, the composition A comprises at least one radically polymerizable monomer, wherein said at least one radically polymerizable monomer is a polymerizable multifunctional monomer comprising at least three reactive groups, composition A further comprises at least one bifunctional acrylate, or at least one bifunctional methacrylate or a mixture thereof, wherein said bifunctional acrylate or bifunctional methacrylate, respectively, has the chemical formula (I): 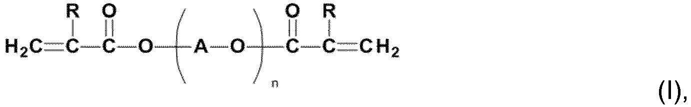 wherein R is H or CH₃, A is alkylene with 3 to 6 carbon atoms, and n is an integer of 8 to 12, preferably of 9 to 10. In this embodiment, composition B is identical to composition A and comprises further at least one photochromic compound. Preferably, the spectacle lens is additively manufactured layer by layer using first composition A e.g. as printing ink, then composition B as e.g. printing ink and finally composition A e.g. as printing ink. Further preferably, the at least one layer manufactured by using composition B e.g. as printing ink is located in a distance of 170 µm maximum from the front surface of the spectacle lens, i.e. the surface of the spectacle lens intended to be fitted away from the eye. Further preferably, the at least one layer manufactured by using composition B e.g. as printing ink is located in a distance of from 7 µm to 147 µm, preferably of from 17 µm to 111 µm, further preferably of from 21 µm to 76 µm, and particularly preferably of from 27 µm to 66 µm, each range referring to the distance of the at least one layer using composition B to the front surface of the spectacle lens, the front surface being without any further coatings.

In another embodiment of the invention, an additive manufacturing process for the manufacturing of spectacle lenses comprises the following steps:
a. providing a three dimensional model of the spectacle lens,
b. providing composition, e.g. a printing ink, preferably a photochromic composition comprising at least one photochromic compound, and at least one radically polymerizable monomer, wherein said at least one radically polymerizable monomer is a polymerizable multifunctional monomer comprising at least three reactive groups, said photochromic composition further comprises at least one bifunctional acrylate, or at least one bifunctional methacrylate or a mixture thereof, wherein said bifunctional acrylate or bifunctional methacrylate, respectively, has the chemical formula (I): 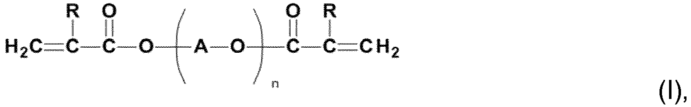 wherein R is H or CH₃, A is alkylene with 3 to 6 carbon atoms, and n is an integer of 8 to 12, preferably of 9 to 10.
c. printing the spectacle lens layer-by-layer,
d. fully or partially curing the printed layers of step c. after each layer was printed,
e. fully curing the printed spectacle lens,
f. optionally polishing the front and the rear surface of the cured spectacle lens,
g. optionally coating at least one of the surfaces of the spectacle lens and
h. optionally grinding the spectacle lens.

In another embodiment of the invention, the viscosity of the photochromic composition usable for the additive manufacturing of spectacle lenses is preferably in a range of from 4 mPa·s to 56 mPa·s, further preferably of from 7 mPa·s to 45 mPa·s, particularly preferably of from 9 mPa·s to 34 mPa·s, and especially preferably of from 10 mPa·s to 22 mPa·s. The viscosity is preferably measured with the rheometer C-VOR 150 (company Malvern) with an angular speed of 5,2 rad/sec at 25°C.

The invention is further illustrated by the following examples and figures. The scope of the invention is not limited to the specific embodiments described below. The invention may be practiced other than particularly described and still be within the scope of the accompanying claims.

### Figure

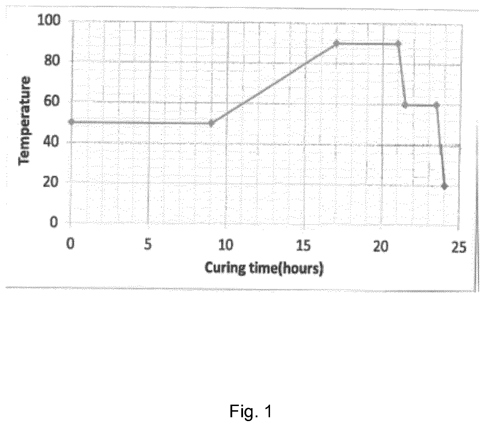

Fig. 1 is a profile of a curing cycle typically used to cure the photochromic lenses according to the invention.

### Examples

### Example 1

Photochromic composition of the invention as specified in Table 1. The quantities are given in parts of weight:

**Table 1**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 0.05 |
| Radical chain transfer agent | terpinolene | 0.5 |
| Dye dissolver | 1,9-nonanediol dimethacrylate | 10 |
| Photochromic switching speed improver | Polytetramethylene glycol 650 dimethacrylate (NK ESTER PTMG65, Shin-Nakamura Chemical Co. Ltd., JP) | 35 |
| Trifunctional acrylate monomer to improve lens rigidity | NK-Ester ATMM-3L (Shin-Nakamura Chemical Co. Ltd., JP) | 20 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 35 |
| Polymerization Initiator | TBPEH (t-butyl per-2-ethylhexanoate) | 2.5 |

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 1 by introducing the photochromic composition into lens mold assemblies and curing the photochromic composition in an oven with the heating profile shown in Fig. 1. The spectacle lenses had a diameter of 70 mm, a minimum center thickness of 1 mm and a maximum center thickness of 15 mm.

The spectacle lens had the following physical properties as indicated in Table 2.

**Table 2:**

| | |
|---|---|
| Experiment number | 64392 |
| RI (D) (refractive index d line) | 1.5028 |
| Abbe(D) (Abbe number) | 53.3 |
| RI (E) (refractive index e line) | 1.5050 |
| Abbe(E) (Abbe number) | 53.0 |
| density | 1.164 |
| Lens appearance(SF) | good |
| NIR area for C=C bond peak/lens thickness(mm) before postcure | 1.047 |
| NIR area for C=C bond peak/lens thickness(mm) after post cure | 1.034 |
| Storage Modulus at 35 °C(GPa) | 1.255 |
| Tan ð at 35°C | 0.1377 |
| Tg(°C) (glass transition temperature) | 84.2 |
| Rimless tensile strength(kg) | 6.4 |
| Initial %T | 89.4 |
| Activated %T | 10.9 |
| T_{3/4} fading time(sec) | 172 |
| Fading Time to 70%(sec) | 426 |

As can be seen from Table 2, the spectacle lens manufactured combines an excellent photochromic switching speed, indicated by the T_{3/4} fading time(sec) and also the fading Time to 70%(sec), and excellent mechanical properties, indicated by storage modulus at 35 °C, Tan ð value, rimless tensile strength, and the glass transition temperature.

### Example 2

Photochromic composition of the invention as specified in Table 3. The quantities are given in parts of weight:

**Table 3**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 0.05 |
| Radical chain transfer agent | terpinolene | 0.5 |
| Dye dissolver | 1,9-nonanediol dimethacrylate | 10 |
| Photochromic switching speed improver | Polytetramethylene glycol 650 dimethacrylate (NK ESTER PTMG65, Shin-Nakamura Chemical Co. Ltd., JP) | 35 |
| Trifunctional methacrylate monomer to improve lens rigidity | Trimethylolpropane trimethacrylate, NK-Ester TMPT (Shin-Nakamura Chemical Co. Ltd., JP) | 25 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 30 |
| Polymerization Initiator | TBPEH (t-butyl per-2-ethylhexanoate) | 1.25 |
| Polymerization Initiator | TBPB (Tert-ButylPeroxybenzoate) | 1.25 |

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 3 by introducing the photochromic composition into lens mold assemblies and curing the photochromic composition in an oven with the heating profile below.

Starting at 57 °C and hold at 57 °C for 10 hours; gradually heat up to 80 °C in 4 hours and hold at 80 °C for 1 hour; gradually heat up to 110 °C in 3 hours and hold at 110 °C for 3 hours; cool down to 60 °C in 0.5 hour.

The spectacle lenses had a diameter of 70 mm, a minimum center thickness of 1 mm and a maximum center thickness of 15 mm.

The spectacle lens had the following physical properties as indicated in Table 4.

**Table 4:**

| | |
|---|---|
| Experiment number | 64371D |
| Lens appearance(SF) | good |
| NIR area for C=C bond peak/ lens thickness (mm) after post cure | 1.1034 |
| Storage Modulus at 35 °C(GPa) | 1.349 |
| Tan ð at 35°C | 0.1436 |
| Tg(°C) (glass transition temperature) | 94.8 |
| Rimless tensile strength(kg) | 5.7 |
| Initial %T | 88.9 |
| Activated %T | 12.8 |
| T_{3/4} fading time(sec) | 169 |
| Fading Time to 70%(sec) | 372 |

As can be seen from Table 4, the spectacle lens manufactured combines an excellent photochromic switching speed, indicated by the T_{3/4} fading time(sec) and also the fading Time to 70%(sec), and excellent mechanical properties, indicated by storage modulus at 35 °C, Tan ð value at 35 °C, rimless tensile strength, and the glass transition temperature.

### Example 3

Photochromic composition of the invention as specified in Table 5. The quantities are given in parts of weight:

**Table 5**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 1 |
| Radical chain transfer agent | terpinolene | 0.5 |
| Dye dissolver | 1,9-nonanediol dimethacrylate | 10 |
| Photochromic switching speed improver | Polytetramethylene glycol 650 dimethacrylate (NK ESTER PTMG65, Shin-Nakamura Chemical Co. Ltd., JP) | 35 |
| Trifunctional methacrylate monomer to improve lens rigidity | Trimethylolpropane trimethacrylate, NK-Ester TMPT (Shin-Nakamura Chemical Co. Ltd., JP) | 20 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 35 |
| Polymerization Initiator | TBPEH (t-butyl per-2-ethylhexanoate) | 1.25 |
| Polymerization Initiator | TBPB (Tert-ButylPeroxybenzoate) | 1.25 |

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 5 by introducing the photochromic composition into lens mold assemblies and curing the photochromic composition in an oven with the heating profile below.

Starting at 57 °C and hold at 57 °C for 10 hours; gradually heat up to 80 °C in 4 hours and hold at 80 °C for 1 hour; gradually heat up to 110 °C in 3 hours and hold at 110 °C for 3 hours; cool down to 60 °C in 0.5 hour.

The spectacle lenses had a diameter of 70 mm, a minimum center thickness of 1 mm and a maximum center thickness of 15 mm.

The spectacle lens had the following physical properties as indicated in Table 6.

**Table 6:**

| | |
|---|---|
| Experiment number | 64372B |
| Lens appearance(SF) | good |
| NIR area for C=C bond peak/ lens thickness (mm) after post cure | 0.909 |
| Storage Modulus at 35 °C(GPa) | 1.330 |
| Tan ð at 35°C | 0.1379 |
| Tg(°C) (glass transition temperature) | 112.8 |
| Rimless tensile strength(kg) | 5.5 |
| Initial %T | 89.5 |
| Activated %T | 13.7 |
| T_{3/4} fading time(sec) | 183 |
| Fading Time to 70%(sec) | 388 |

As can be seen from Table 4, the spectacle lens manufactured combines an excellent photochromic switching speed, indicated by the T_{3/4} fading time(sec) and also the fading Time to 70%(sec), and excellent mechanical properties, indicated by storage modulus at 35 °C, Tan ð value at 35 °C, rimless tensile strength, and the glass transition temperature.

### Example 4

Photochromic composition of the invention as specified in Table 7. The quantities are given in parts of weight:

**Table 7**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 1 |
| Radical chain transfer agent | terpinolene | 0.3 |
| Dye dissolver | 1,9-nonanediol dimethacrylate | 10 |
| Photochromic switching speed improver | Polytetramethylene glycol 650 diacrylate (NK ESTER A-PTMG65, Shin-Nakamura Chemical Co. Ltd., JP) | 35 |
| Trifunctional acrylate monomer to improve lens rigidity | NK-Ester ATMM-3L (Shin-Nakamura Chemical Co. Ltd., JP) | 20 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 35 |
| Polymerization Initiator | TBPEH (t-butyl per-2-ethylhexanoate) | 2.5 |

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 7 by introducing the photochromic composition into lens mold assemblies and curing the photochromic composition in an oven with the heating profile shown in Fig. 1. The spectacle lenses had a diameter of 70 mm, a minimum center thickness of 1 mm and a maximum center thickness of 15 mm.

The spectacle lens had the following physical properties as indicated in Table 8.

**Table 8:**

| | |
|---|---|
| Experiment number | 64380C |
| Lens appearance(SF) | good |
| NIR area for C=C bond peak/lens thickness(mm) before postcure | 0.877 |
| NIR area for C=C bond peak/lens thickness(mm) after post cure | 0.777 |
| Storage Modulus at 35 °C(GPa) | 1.154 |
| Tan ð at 35°C | 0.1448 |
| Tg(°C) (glass transition temperature) | 103.4 |
| Rimless tensile strength(kg) | 6.3 |
| Initial %T | 87.8 |
| Activated %T | 11.1 |
| T_{3/4} fading time(sec) | 186 |
| Fading Time to 70%(sec) | 552 |

As can be seen from Table 4, the spectacle lens manufactured combines an excellent photochromic switching speed, indicated by the T_{3/4} fading time(sec) and also the fading Time to 70%(sec), and excellent mechanical properties, indicated by storage modulus at 35 °C, Tan ð value at 35 °C, rimless tensile strength, and the glass transition temperature.

### Comparative Example 1

The comparative example 1 formulation is listed in Table 9. The quantities are given in parts of weight:

**Table 9**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 0.05 |
| Radical chain transfer agent | terpinolene | 0.5 |
| Dye dissolver | 1,9-nonanediol dimethacrylate | 10 |
| Photochromic switching speed improver, difunctional, dimethacrylate | NK Ester 9PG (Shin-Nakamura Chemical Co. Ltd., JP) | 30 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 60 |
| Polymerization Initiator | TBPEH (t-butyl per-2-ethylhexanoate) | 0.35 |

The chemical structure of NK Ester 9PG (formula (IX) used in this formulation is as follows:

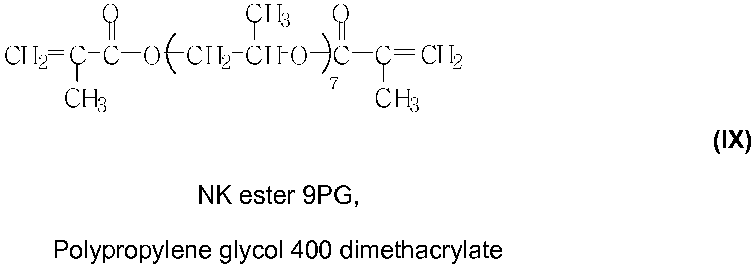

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 9 by introducing the photochromic composition into lens mold assemblies and curing the photochromic composition in an oven with the heating profile below.

Starting at 53 °C and hold at 53 °C for 10 hours; gradually heat up to 80 °C in 3 hours and hold at 80 °C for 8 hour; cool down to 60 °C in 0.5 hour.

The spectacle lenses had a diameter of 70 mm, a minimum center thickness of 1 mm and a maximum center thickness of 15 mm.

The spectacle lens had the following physical properties as indicated in Table 10.

**Table 10:**

| | |
|---|---|
| Experiment number | 62786 |
| Lens appearance(SF) | good |
| Storage Modulus at 35 °C(GPa) | 0.9697 |
| Tan ð at 35°C | 0.1966 |
| Tg(°C) (glass transition temperature) | 74.9 |
| Initial %T | 89.0 |
| Activated %T | 11.0 |
| T_{3/4} fading time(sec) | 256 |
| Fading Time to 70%(sec) | 744 |

In comparative example 1, monomers with formulas I, II and III were not used in the formulation, instead NK ester 9PG was used. Furthermore, no trifunctional acrylate monomer was used. As can be seen from Table 10, photochromic switching speed is slower, indicated by the T_{3/4} fading time(sec) and also the fading Time to 70%(sec). The storage modulus at 35 °C is low, the glass transition temperature is low too.

### Comparative Example 2

The comparative example 2 formulation is listed in Table 11. The quantities are given in parts of weight:

**Table 11**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 0.05 |
| Radical chain transfer agent | terpinolene | 0.5 |
| Dye dissolver | 1,9-nonanediol dimethacrylate | 10 |
| Photochromic switching speed improver, difunctional, dimethacrlate | NK Ester 9PG (Shin-Nakamura Chemical Co. Ltd., JP) | 55 |
| Trifunctional acrylate monomer to improve lens rigidity | NK-Ester ATMM-3L (Shin-Nakamura Chemical Co. Ltd., JP) | 10 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 25 |
| Polymerization Initiator | TBPB (Tert-ButylPeroxybenzoate) | 0.50 |

The chemical structure of NK Ester 9PG (formula (IX) used in this formulation is as follows:

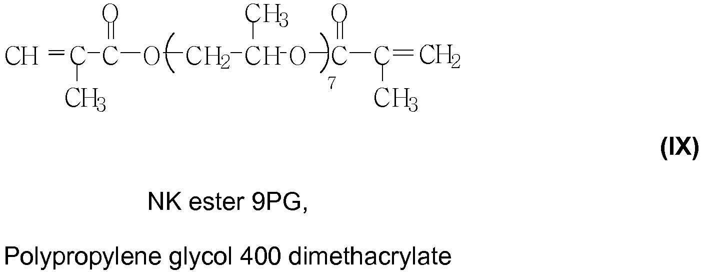

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 11 by introducing the photochromic composition into lens mold assemblies and curing the photochromic composition in an oven with the heating profile below.

Starting at 70 °C and hold at 70 °C for 10 hours; gradually heat up to 80 °C in 4 hours and hold at 80 °C for 1 hour; gradually heat up to 110 °C in 2 hours and hold at 110 °C for 4 hour; cool down to 60 °C in 0.5 hour.

The spectacle lenses had a diameter of 70 mm, a minimum center thickness of 1 mm and a maximum center thickness of 15 mm.

The spectacle lens had the following physical properties as indicated in Table 12.

**Table 12:**

| | |
|---|---|
| Experiment number | 63786 |
| Lens appearance(SF) | good |
| NIR area for C=C bond peak/lens thickness(mm) before postcure | 0.997 |
| NIR area for C=C bond peak/lens thickness(mm) after post cure | 0.881 |
| Storage Modulus at 35 °C(GPa) | 0.993 |
| Tan ð at 35°C | 0.1548 |
| Tg(°C) (glass transition temperature) | 81 |
| Initial %T | 89.1 |
| Activated %T | 8.6 |
| T_{3/4} fading time(sec) | 220 |
| Fading Time to 70%(sec) | 642 |

In comparative example 2, monomers with formula I, II and III were not used in the formulation, instead NK ester 9PG was used. As can be seen from Table 12, photochromic switching speed is slower, indicated by the T_{3/4} fading time(sec) and also the fading Time to 70%(sec). The storage modulus at 35 °C is low.

### Comparative Example 3

The comparative example 3 formulation is listed in Table 13. The quantities are given in parts of weight:

**Table 13**

| **Component Type** | **Component Name (commercial source)** | **Quantity in parts** |
|---|---|---|
| Photochromic dye, yellow | CNN16 (Tokuyama Corp, JP) | 0.013 |
| Photochromic dye, blue | CNN13 (Tokuyama Corp, JP) | 0.04 |
| Photochromic dye, blue | CNN15 (Tokuyama Corp, JP) | 0.01 |
| Photochromic dye, green | CNN14 (Tokuyama Corp, JP) | 0.01 |
| HALS (to neutralize acid groups, and stabilize the lenses) | Tinuvin 765 (BASF, Germany) | 0.05 |
| Radical chain transfer agent | terpinolene | 0.5 |
| Dye dissolver | 1,9-nonanediol dimethacrylate | 10 |
| Photochromic switching speed improver, difunctional, dimethacrylate | NK Ester 9G (Shin-Nakamura Chemical Co. Ltd., JP) | 30 |
| Monomer-mixture SONK (mixture of bifunctional methacrylate monomer and bifunctional acrylate urethane monomer) | 50/50 mixture of NK Ester 2G and NK Oligo U-2PPA (Shin-Nakamura Chemical Co. Ltd., JP) | 60 |
| Polymerization Initiator | TBPEH (t-butyl per-2-ethylhexanoate) | 0.31 |

The chemical structure of NK Ester 9G (formula (X) used in this formulation is as follows:

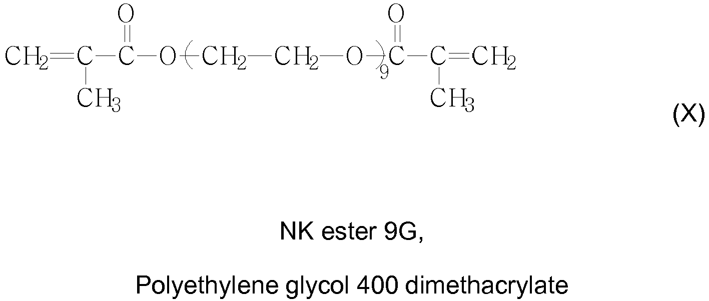

The photochromic dyes were dissolved in 1,9-nonanediol dimethacrylate first for 30 minutes, then the remaining components were added in and stirred. After degassing and filtration, the photochromic composition was filled in the lens mold assembly. Spectacle lenses were made from the photochromic composition of Table 13 by introducing the photochromic composition into lens mold assemblies and curing the photochromic composition in an oven with the heating profile below.

Starting at 53 °C and hold at 53 °C for 10 hours; gradually heat up to 80 °C in 3 hours and hold at 80 °C for 8hour; cool down to 60 °C in 0.5 hour.

The spectacle lenses had a diameter of 70 mm, a minimum center thickness of 1 mm and a maximum center thickness of 15 mm.

The spectacle lens had the following physical properties as indicated in Table 14.

**Table 14:**

| | |
|---|---|
| Experiment number | 64134 |
| Lens appearance(SF) | good |
| NIR area for C=C bond peak/lens thickness(mm) before postcure | 1.561 |
| NIR area for C=C bond peak/lens thickness(mm) after post cure | 1.228 |
| Storage Modulus at 35 °C(GPa) | 0.8169 |
| Tan ð at 35°C | 0.2512 |
| Tg(°C) (glass transition temperature) | 77 |
| Initial %T | 90.5 |
| Activated %T | 8.5 |
| T_{3/4} fading time(sec) | 208 |
| Fading Time to 70%(sec) | 539 |

In comparative example 3, monomers with formulas I, II and III were not used in the formulation, instead NK ester 9G was used. Furthermore, no trifunctional acrylate was used. As can be seen from Table 14, photochromic switching speed is slower, indicated by the T_{3/4} fading time(sec) and also the fading Time to 70%(sec). The storage modulus at 35 °C is low. One problem for lenses containing NK ester 9G is that it absorb too much water, which causes issues for AR coating stability.

**Table 15. Summary results of the examples and comparative examples**

| | Storage Modulus at 35 °C(GPa) | Tg(°C) (glass transition temperature) | T_{3/4} fading time(sec) | Fading Time to 70%(sec) |
|---|---|---|---|---|
| Example 1 | 1.255 | 84.2 | 172 | 426 |
| Example 2 | 1.349 | 88.9 | 169 | 372 |
| Example 3 | 1.330 | 112.8 | 183 | 388 |
| Example 4 | 1.154 | 103.4 | 186 | 552 |
| Comparative example 1 | 0.970 | 74.9 | 256 | 744 |
| Comparative example 2 | 0.993 | 81 | 220 | 642 |
| Comparative example 3 | 0.817 | 77 | 208 | 539 |

In Table 15, lenses from examples 1-4, all had high storage modulus and glass transition temperature, at the same time the photochromic switch speed are fast.

The lenses from comparative examples 1-3, had lower storage modulus and glass transition temperature, the photochromic switch speed are slower than the lenses in examples.

Normally, harder and more rigid lenses will have slower photochromic switching speed. In this invention, rigid lenses with faster photochromic speed are obtained.

## Claims

1. A photochromic composition comprising at least one photochromic compound, and at least one radically polymerizable monomer,
**characterized in that,**
said at least one radically polymerizable monomer is a polymerizable multifunctional monomer comprising at least three reactive groups and is present in an amount of 20 to 50 wt.-%, based on the total weight of the photochromic composition,
said photochromic composition further comprises at least one bifunctional acrylate, or at least one bifunctional methacrylate or a mixture thereof, wherein said bifunctional acrylate or bifunctional methacrylate, respectively, has the chemical formula (I): 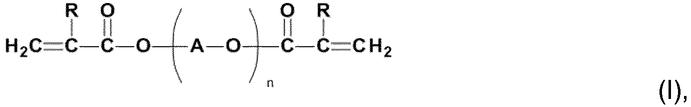 wherein
R is H or CH₃,
A is alkylene with 3 to 6 carbon atoms, and
n is an integer of 8 to 12, preferably of 9 to 10.

2. The photochromic composition according to claim 1,
**characterized in that,**
said reactive group(s) is/are selected from the group consisting of acrylate, methacrylate, and mixtures thereof.

3. The photochromic composition according to any one of claims 1 to 2,
**characterized in that,**
said photochromic composition further comprises at least one amine, preferably at least one hindered amine light stabilizer, preferably in an amount of 0.01 to 1 wt.-%, based on the total weight of the photochromic composition.

4. The photochromic composition according to any one of claims 1 to 3,
**characterized in that,**
said photochromic composition further comprises a free radical initiator, preferably in an amount of 0.1 to 5 wt.-%, based on the total weight of the photochromic composition.

5. The photochromic composition according to any of claims 1 to 4,
**characterized in that,**
said photochromic composition comprises at least one radical chain transfer agent which is preferably selected from the group consisting of terpinolene, terpinolene derivative, 1-isopropyl-4-methyl-1,4-cyclohexadiene, 1-isopropyl-4-methyl-1,3-cyclohexadiene, and mixtures thereof, and wherein said radical chain transfer agent is preferably present in an amount of 0.01 wt.-% to 2 wt.-%, based on the total weight of the photochromic composition.

6. The photochromic composition according to any of claim 3,
**characterized in that,**
said hindered amine light stabilizer is 2,2,6,6-tetramethyl piperidine or a derivative thereof, and wherein said hindered amine light stabilizer is preferably present in an amount of 0.01 wt.-% to 1 wt.-%, based on the total weight of the photochromic composition.

7. The photochromic composition according to any of claims 1 to 6,
**characterized in that,**
the photochromic composition comprises said at least one of a bifunctional acrylate and bifunctional methacrylate, having the chemical formula according to formula (I), in an amount of 15 to 50 wt.-%, preferably 20 to 40 wt.-%, each based on the total weight of the photochromic composition.

8. The photochromic composition according to any of claims 1 to 7,
**characterized in that,**
the at least one photochromic compound is selected from the group consisting of spironaphthoxazines, spiropyrans, naphthopyrans, triarylmethanes, stilbenes, azastilbenes, nitrones, fulgides, spirooxazines, quinones, chromenes, and mixtures thereof, and wherein said photochromic compound is preferably present in an amount of 0.001 to 0.5 wt.-%, preferably of 0.01 to 0.1 wt.-%, each based on the total weight of photochromic composition.

9. The photochromic composition according to any one of claims 1 to 8,
**characterized in that,**
said photochromic composition comprises said at least one radically polymerizable multifunctional monomer comprising at least three reactive groups in an amount of 20 to 40 wt.-%, based on the total weight of the photochromic composition.

10. The photochromic composition according to any one of claims 1 to 9,
**characterized in that,**
said photochromic composition additionally comprises at least one bifunctional acrylate or at least one bifunctional methacrylate having a chemical formula different from formula (I), preferably 1,9-nonanediol dimethacrylate, preferably in an amount of 5 to 40 wt.-%, preferably 10 to 30 wt.-%, each based on the total weight of the photochromic composition.

11. The photochromic composition according to any one of claims 1 to 10,
**characterized in that,**
said photochromic composition additionally comprises at least one urethane acrylate and/or urethane methacrylate, preferably in an amount of 5 to 40 wt.-%, based on the total weight of the photochromic composition.

12. A spectacle lens,
**characterized in that,**
said spectacle lens is made of a photochromic composition according to any one of claims 1 to 11.

13. A spectacle,
**characterized in that,**
said spectacle comprises a spectacle lens according to claim 12.

14. Process for manufacturing a spectacle lens,
**characterized in that,**
said process comprises the following steps:
introducing a photochromic composition according to any one of claims 1 to 11 into a mold,
curing said photochromic composition.

15. Process according to claim 14,
**characterized in that,**
said curing comprises at least a first heat treatment at a first temperature range and a second heat treatment at a second temperature range, wherein said second temperature range is 40 % to 100 % higher than the first temperature range, based on said first temperature range.

## Patentansprüche

1. Photochrome Zusammensetzung, umfassend mindestens eine photochrome Verbindung und mindestens ein radikalisch polymerisierbares Monomer,
**dadurch gekennzeichnet, dass**
das radikalisch polymerisierbare Monomer ein polymerisierbares multifunktionelles Monomer mit mindestens drei reaktiven Gruppen ist und in einer Menge von 20 bis 50 Gew.-%, bezogen auf das Gesamtgewicht der photochromen Zusammensetzung, vorliegt,
die photochrome Zusammensetzung ferner mindestens ein bifunktionelles Acrylat oder mindestens ein bifunktionelles Methacrylat oder eine Mischung davon umfasst, wobei das bifunktionelle Acrylat bzw. bifunktionelle Methacrylat die chemische Formel (I) aufweist: 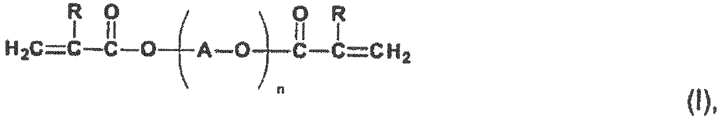 wobei
R für H oder CH₃ steht,
A für Alkylen mit 3 bis 6 Kohlenstoffatomen steht und
n für eine ganze Zahl von 8 bis 12, vorzugsweise von 9 bis 10, steht.

2. Photochrome Zusammensetzung nach Anspruch 1,
**dadurch gekennzeichnet, dass**
die reaktive Gruppe/die reaktiven Gruppen aus der Gruppe bestehend aus Acrylat, Methacrylat und Mischungen davon ausgewählt ist/sind.

3. Photochrome Zusammensetzung nach einem der Ansprüche 1 bis 2,
**dadurch gekennzeichnet, dass**
die photochrome Zusammensetzung ferner mindestens ein Amin, vorzugsweise mindestens ein Lichtschutzmittel vom Typ gehindertes Amin, umfasst, vorzugsweise in einer Menge von 0,01 bis 1 Gew.-%, bezogen auf das Gesamtgewicht der photochromen Zusammensetzung.

4. Photochrome Zusammensetzung nach einem der Ansprüche 1 bis 3,
**dadurch gekennzeichnet, dass**
die photochrome Zusammensetzung mindestens einen Radikalinitiator umfasst, vorzugsweise in einer Menge von 0,1 bis 5 Gew.-%, bezogen auf das Gesamtgewicht der photochromen Zusammensetzung.

5. Photochrome Zusammensetzung nach einem der Ansprüche 1 bis 4,
**dadurch gekennzeichnet, dass**
die photochrome Zusammensetzung mindestens ein Radikalkettenübertragungsmittel umfasst, das vorzugsweise aus der Gruppe bestehend aus Terpinolen, einem Terpinolen-Derivat, 1-Isopropyl-4-methyl-1,4-cyclohexadien, 1-Isopropyl-4-methyl-1,3-cyclohexadien und Mischungen davon ausgewählt ist, wobei das Radikalkettenübertragungsmittel vorzugsweise in einer Menge von 0,01 Gew.-% bis 2 Gew.-%, bezogen auf das Gesamtgewicht der photochromen Zusammensetzung, vorliegt.

6. Photochrome Zusammensetzung nach Anspruch 3,
**dadurch gekennzeichnet, dass**
es sich bei dem Lichtschutzmittel vom Typ gehindertes Amin um 2,2,6,6-Tetramethylpiperidin oder ein Derivat davon handelt und wobei das Lichtschutzmittel vom Typ gehindertes Amin vorzugsweise in einer Menge von 0,01 Gew.-% bis 1 Gew.-%, bezogen auf das Gesamtgewicht der photochromen Zusammensetzung, vorliegt.

7. Photochrome Zusammensetzung nach einem der Ansprüche 1 bis 6,
**dadurch gekennzeichnet, dass**
die photochrome Zusammensetzung ein bifunktionelles Acrylat und/oder ein bifunktionelles Methacrylat mit der chemischen Formel gemäß Formel (I) in einer Menge von 15 bis 50 Gew.-%, vorzugsweise 20 bis 40 Gew.-%, jeweils bezogen auf das Gesamtgewicht der photochromen Zusammensetzung, umfasst.

8. Photochrome Zusammensetzung nach einem der Ansprüche 1 bis 7,
**dadurch gekennzeichnet, dass**
die mindestens eine photochrome Verbindung aus der Gruppe bestehend aus Spironaphthoxazinen, Spiropyranen, Naphthopyranen, Triarylmethanen, Stilbenen, Azastilbenen, Nitronen, Fulgiden, Spirooxazinen, Chinonen, Chromenen und Mischungen davon ausgewählt ist und wobei die photochrome Verbindung vorzugsweise in einer Menge von 0,001 bis 0,5 Gew.-%, vorzugsweise von 0,01 bis 0,1 Gew.-%, jeweils bezogen auf das Gesamtgewicht der photochromen Zusammensetzung, vorliegt.

9. Photochrome Zusammensetzung nach einem der Ansprüche 1 bis 8,
**dadurch gekennzeichnet, dass**
die photochrome Zusammensetzung das mindestens eine radikalisch polymerisierbare multifunktionelle Monomer mit mindestens drei reaktiven Gruppen in einer Menge von 20 bis 40 Gew.-%, bezogen auf das Gesamtgewicht der photochromen Zusammensetzung, umfasst.

10. Photochrome Zusammensetzung nach einem der Ansprüche 1 bis 9,
**dadurch gekennzeichnet, dass**
die photochrome Zusammensetzung zusätzlich mindestens ein bifunktionelles Acrylat oder mindestens ein bifunktionelles Methacrylat mit einer von Formel (I) verschiedenen chemischen Formel, vorzugsweise 1,9-Nonandioldimethacrylat, umfasst, vorzugsweise in einer Menge von 5 bis 40 Gew.-%, vorzugsweise 10 bis 30 Gew.-%, jeweils bezogen auf das Gesamtgewicht der photochromen Zusammensetzung.

11. Photochrome Zusammensetzung nach einem der Ansprüche 1 bis 10,
**dadurch gekennzeichnet, dass**
die photochrome Zusammensetzung zusätzlich mindestens ein Urethanacrylat und/oder Urethanmethacrylat umfasst, vorzugsweise in einer Menge von 5 bis 40 Gew.-%, bezogen auf das Gesamtgewicht der photochromen Zusammensetzung.

12. Brillenlinse,
**dadurch gekennzeichnet, dass**
die Brillenlinse aus einer photochromen Zusammensetzung nach einem der Ansprüche 1 bis 11 gefertigt ist.

13. Brille,
**dadurch gekennzeichnet, dass**
die Brille eine Brillenlinse nach Anspruch 12 umfasst.

14. Verfahren zur Herstellung einer Brillenlinse,
**dadurch gekennzeichnet, dass**
das Verfahren die folgenden Schritte umfasst: Eintragen einer photochromen Zusammensetzung nach einem der Ansprüche 1 bis 11 in eine Form, Härten der photochromen Zusammensetzung.

15. Verfahren nach Anspruch 14,
**dadurch gekennzeichnet, dass**
das Härten mindestens eine erste Wärmebehandlung in einem ersten Temperaturbereich und eine zweite Wärmebehandlung in einem zweiten Temperaturbereich umfasst, wobei der zweite Temperaturbereich 40 % bis 100 % höher liegt als der erste Temperaturbereich, bezogen auf den ersten Temperaturbereich.

## Revendications

1. Composition photochromique comprenant au moins un composé photochromique et au moins un monomère polymérisable par voie radicalaire, **caractérisée en ce que**
ledit au moins un monomère polymérisable par voie radicalaire est un monomère multi-fonctionnel polymérisable comprenant au moins trois groupes réactifs et est présent dans une quantité de 20 jusqu'à 50% en poids, sur la base du poids total de la composition photochromique,
ladite composition photochromique comprenant en outre au moins un acrylate bifonctionnel ou au moins un méthacrylate bifonctionnel ou un mélange correspondant, ledit acrylate bifonctionnel ou méthacrylate bifonctionnel ayant respectivement la formule chimique (I) : 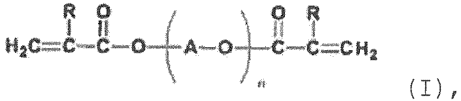
R représentant H ou CH₃,
A représentant alkylène comprenant 3 jusqu'à 6 atomes et
n représentant un entier de 8 jusqu'à 12, préférablement de 9 jusqu'à 10.

2. Composition photochromique selon la revendication 1, **caractérisée en ce que**
ledit ou lesdits groupe (s) réactif(s) est/sont choisi(s) dans le groupe constitué par acrylate, par méthacrylate et par les mélanges correspondants.

3. Composition photochromique selon l'une quelconque des revendications 1 à 2, **caractérisée en ce que** ladite composition photochromique comprend au moins une amine, préférablement un stabilisant à la lumière du type amine encombrée stériquement, préférablement dans une quantité de 0,01 jusqu'à 1% en poids, sur la base du poids total de la composition photochromique.

4. Composition photochromique selon l'une quelconque des revendications 1 à 3, **caractérisée en ce que** ladite composition photochromique comprend en outre un amorceur de radicaux libres, préférablement dans une quantité de 0,1 jusqu'à 5% en poids, sur la base du poids total de la composition photochromique.

5. Composition photochromique selon l'une quelconque des revendications 1 à 4, **caractérisée en ce que** ladite composition photochromique comprend au moins un agent de transfert de chaîne radicalaire, préférablement choisi dans le groupe constitué par le terpinolène, un dérivé du terpinolène, le 1-isopropyl-4-méthyl-1,4-cyclohexadiène, le 1-isopropyl-4-méthyl-1,3-cyclohexadiène et les mélanges correspondants, ledit agent de transfert de chaîne radicalaire étant préférablement présent dans une quantité de 0,01% en poids jusqu'à 2% en poids, sur la base du poids total de la composition photochromique.

6. Composition photochromique selon la revendication 3, **caractérisée en ce que**
ledit stabilisant à la lumière de type amine encombrée stériquement est la 2,2,6,6-tétraméthylpipéridine ou un dérivé de celle-ci, ledit stabilisant à la lumière de type amine encombrée stériquement étant préférablement présent dans une quantité de 0,01% en poids jusqu'à 1% en poids, sur la base du poids total de la composition photochromique.

7. Composition photochromique selon l'une quelconque des revendications 1 à 6, **caractérisée en ce que** la composition photochromique comprend ledit au moins l'un parmi un acrylate bifonctionnel et un méthacrylate bifonctionnel, ayant la formule chimique selon la formule (I), dans une quantité de 15 jusqu'à 50% en poids, préférablement de 20 jusqu'à 40% en poids, chacun sur la base du poids total de la composition photochromique.

8. Composition photochromique selon l'une quelconque des revendications 1 à 7, **caractérisée en ce que** ledit au moins un composé photochromique est choisi dans le groupe constitué par les spironaphtoxazines, les spiropyrannes, les naphtopyrannes, les triarylméthanes, les stilbènes, les azastilbènes, les nitrones, les fulgides, les spirooxazines, les quinones, les chromènes et les mélanges correspondants et ledit composé photochromique étant préférablement présent dans une quantité de 0,001 jusqu'à 0,5% en poids, préférablement de 0,01 jusqu'à 0,1% en poids, chacun sur la base du poids total de la composition photochromique.

9. Composition photochromique selon l'une quelconque des revendications 1 à 8, **caractérisée en ce que** ladite composition photochromique comprend ledit au moins un monomère multi-fonctionnel polymérisable par voie radicalaire comprenant au moins trois groupes réactifs dans une quantité de 20 jusqu'à 40% en poids, sur la base du poids total de la composition photochromique.

10. Composition photochromique selon l'une quelconque des revendications 1 à 9, **caractérisée en ce que** ladite composition photochromique comprend de plus au moins un acrylate bifonctionnel ou au moins un méthacrylate bifonctionnel ayant une formule chimique différente de la formule (I), préférablement le diméthacrylate de 1,9-nonanediol, préférablement dans une quantité de 5 jusqu'à 40% en poids, préférablement 10 jusqu'à 30% en poids, chacun sur la base du poids total de la composition photochromique.

11. Composition photochromique selon l'une quelconque des revendications 1 à 10, **caractérisée en ce que** ladite composition photochromique comprend de plus au moins un acrylate d'uréthane et/ou un méthacrylate d'uréthane, préférablement dans une quantité de 5 jusqu'à 40% en poids, sur la base du poids total de la composition photochromique.

12. Verre de lunettes, **caractérisé en ce que** ledit verre de lunettes est fabriqué à partir d'une composition photochromique selon l'une quelconque des revendications 1 à 11.

13. Lunettes, **caractérisées en ce que** lesdites lunettes comprennent un verre de lunettes selon la revendication 12.

14. Procédé de fabrication d'un verre de lunettes,
**caractérisé en ce que**
ledit procédé comprend les étapes suivantes :
introduction de la composition photochromique selon l'une quelconque des revendications 1 à 11 dans un moule,
durcissement de ladite composition photochromique.

15. Procédé selon la revendication 14, **caractérisé en ce que**
ledit durcissement comprend au moins un premier traitement par la chaleur dans une première plage de température et un deuxième traitement à la chaleur dans une deuxième plage de température, ladite deuxième plage de température étant 40% jusqu'à 100% supérieure à la première plage de température, sur la base de ladite première plage de température.
